# EUROPEAN PATENT SPECIFICATION

(11) **EP 2 346 062 B1**
(45) Date of publication and mention of the grant of the patent: **17.06.2015**
(21) Application number: 11150837.0
(22) Date of filing: 13.01.2011
(51) Int. Cl.: H01H 77/10, H01H 71/10

(54) **Circuit breaker**
Schutzschalter
Disjoncteur

(30) Priority: 18.01.2010 KR 20100004491
(43) Date of publication of application: 20.07.2011
(73) Proprietor: LS Industrial Systems Co., Ltd, Dongan-Gu Anyang, Gyeonggi-Do (KR)
(72) Inventor: Shin, Seung Pil, Chungcheongbuk-Do (KR)
(74) Representative: Hoffmann Eitle

(56) References cited:
- EP-A1- 0 006 637
- EP-A1- 1 772 885
- EP-A2- 0 903 763
- US-A- 4 733 211
- US-A- 5 844 455

## Description

### BACKGROUND OF THE INVENTION

### 1. Field of the Invention

The present invention relates to a circuit breaker capable of performing a breaking operation for line protection or for opening and closing a load, or when an overload and a short circuit have occurred, and particularly, to a circuit breaker having a shaft unit, the circuit breaker capable of minimizing damages due to an accident current by rapidly performing a tripping operation when an accident current has occurred.

### 2. Background of the Invention

Generally, a circuit breaker normally maintains a conductive status when a rated current flows, but performs a breaking operation when an accident current occurs. More concretely, a fixed contact and a moveable contact maintain a closed status when a normal current flows. However, when an accident current has occurred, the fixed contact and the moveable contact are separated from each other to break the accident current as a trip unit detects the accident current and transmits a signal to a switching mechanism. Then, the switching mechanism is released.

Here, it takes several minutes for the switching mechanism to be released. The shorter the time, the more a breaking function of the circuit breaker is maximized. While the accident current is applied to the fixed contact and the moveable contact, an electromagnetic repulsive force is generated between the fixed contact and the moveable contact. As a result, the fixed contact and the moveable contact are separated from each other.

Once the moveable contact has been separated from the fixed contact by the electromagnetic repulsive force, the trip unit detects the accident current to limit the accident current before the switching mechanism is released. This may reduce the amount of energy applied to the circuit breaker to prevent damages of the circuit breaker, thereby maximizing a breaking function of the circuit breaker.

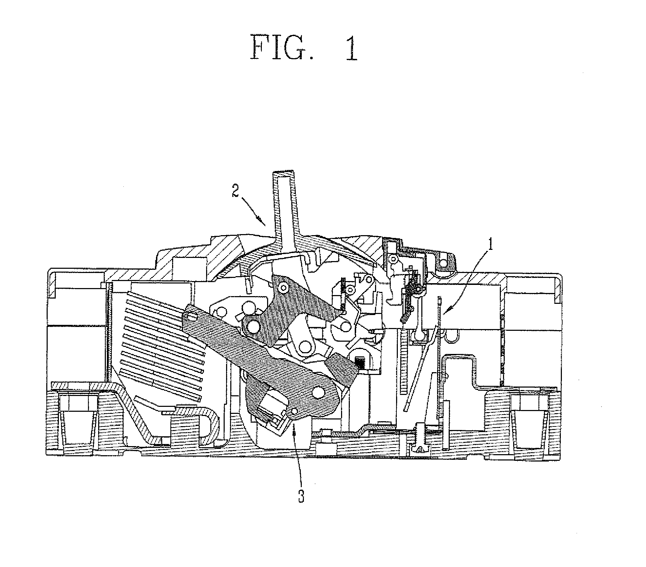

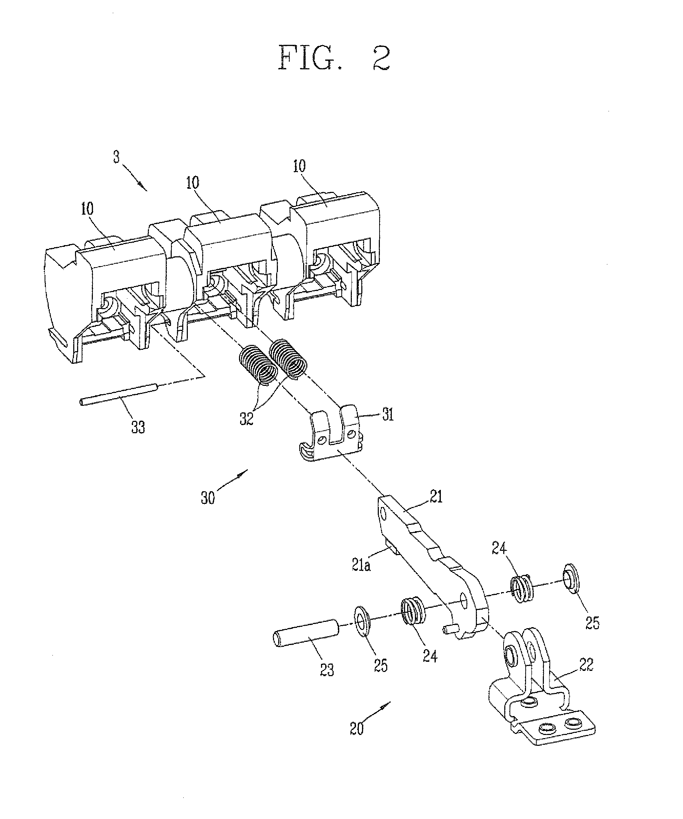

FIG. 1 is a sectional view of a circuit breaker having a shaft assembly in accordance with the conventional art, and FIG. 2 is a disassembled perspective view of a latch unit and a moveable plate unit of the shaft assembly in FIG. 1.

As shown, the conventional circuit breaker comprises a trip unit 1 configured to detect an accident current, a switching mechanism 2 configured to separate a moveable contact 21 a from a fixed contact 5a by receiving a signal indicating the occurrence of an accident current from the trip unit 1, and a shaft assembly 3 configured to perform a closing or tripping operation by the switching mechanism 2.

The shaft assembly 3 includes a shaft 10, a moveable plate unit 20 having the moveable contact 21a detachably mounted to the fixed contact 5a fixed to the circuit breaker, and rotatably coupled to the shaft 10, and a latch unit 30 disposed between the shaft 10 and the moveable plate unit 20 so that the moveable plate unit can maintain a closed or tripped status.

The moveable plate unit 20 consists of a moveable plate 21 having the moveable contact 21a welded at one end thereof, and having a pin forcibly inserted at another end thereof, a connecting plate 22 coupled to the shaft 10 and having the moveable plate 21 rotatably coupled thereto, a connecting pin 23 configured to couple the moveable plate 21 and the connecting plate 22 to each other, connecting springs 24 configured to generate a contact pressure by pushing the moveable plate 21 and the connecting plate 22 from two sides, and washers 25 configured to prevent separation of the connecting springs 24.

The latch unit 30 consists of a limit latch 31 supported by the shaft 10 and the moveable plate 21, a latch spring 32 implemented as a compression spring so as to elastically support the limit latch 31, and a limit pin 33 penetratingly formed at the shaft 10 and the limit latch 31 and configured to rotatably support the limit latch 31 by the shaft 10.

Unexplained reference numeral 5 denotes a fixed plate, 11 denotes a pin groove, and 21 b denotes a moveable plate pin.

The operation of the conventional shaft assembly will be explained.

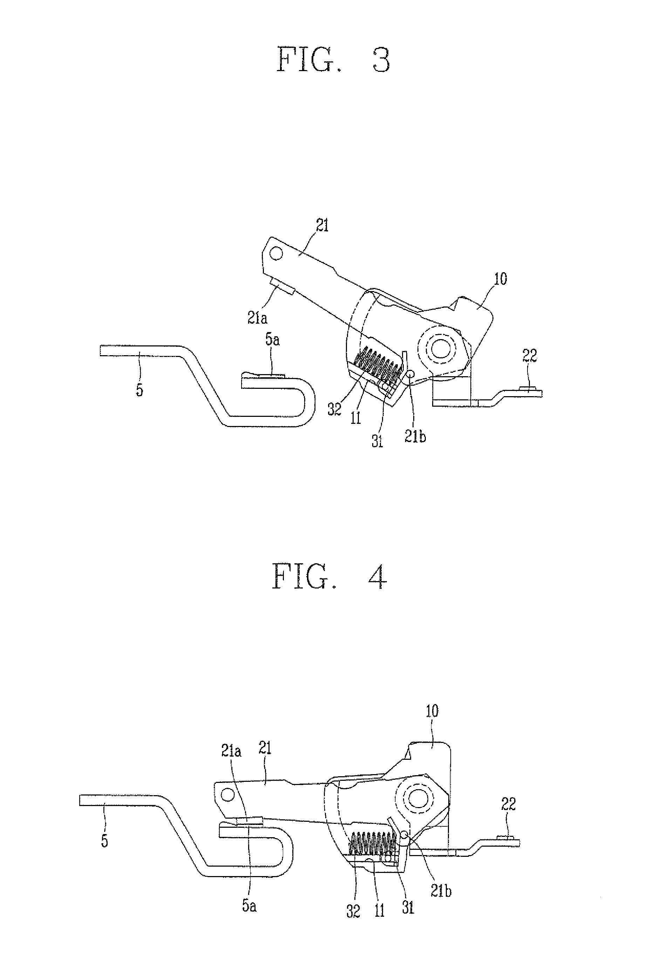

As shown in FIG. 3, a compression force of the limit spring 32 assembled to the shaft 10 is transmitted to a moveable plate pin 21 b forcibly inserted into the moveable plate 21 through the limit latch 31. As a result, the moveable plate 21 maintains an OFF status.

As shown in FIG. 4, when the circuit breaker is in a closed (ON) status by the switching mechanism 2, the shaft assembly 3 is rotated to allow the moveable contact 21 a of the moveable plate 21 to come in contact with the fixed contact 5a of the fixed plate 5. Here, the compression force of the limit spring 32 is transmitted to the moveable plate pin 21b forcibly inserted into the moveable plate 21 through the limit latch 31. As a result, a contact pressure is generated between the fixed contact 5a and the moveable contact 21 a.

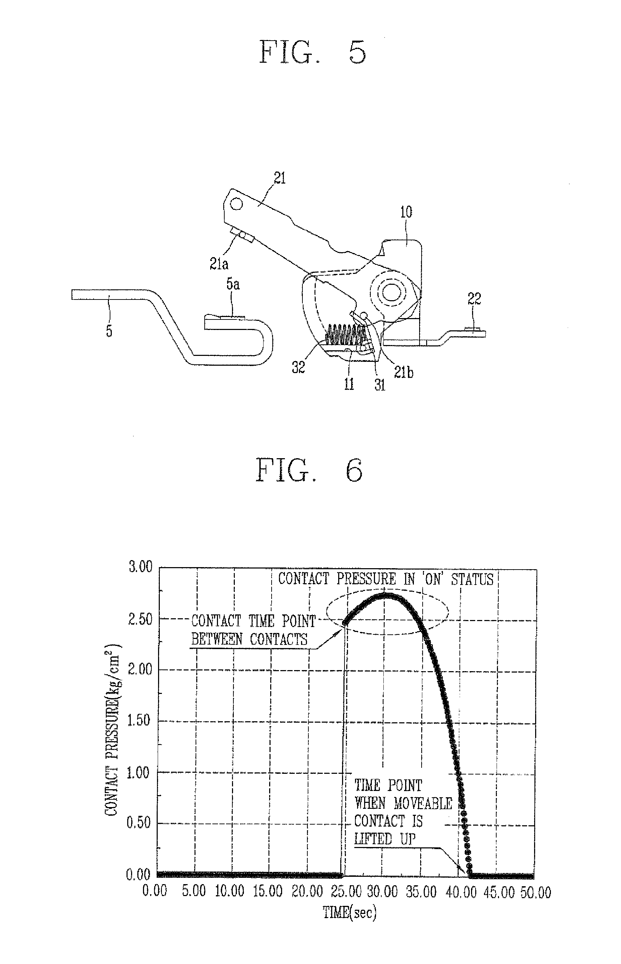

As shown in FIG. 5, in the occurrence of an accident current, a contact repulsive force is generated between the fixed contact 5a of the fixed plate 5 and the moveable contact 21 a of the moveable plate 21. As a result, the moveable plate 21 is lifted up. Here, the moveable plate pin 21 b moves along an operation surface (outer surface) of the limit latch 31, which is located on positions different from the operation surface of the limit latch 31 shown in FIGS. 3 and 4. Then, the compression force of the limit spring 32 assembled to the shaft 10 is transmitted to the moveable plate pin 21b forcibly inserted into the moveable plate 21 through the limit latch 31. As a result, the moveable plate 21 is lifted up (current limiting status).

However, the conventional shaft assembly consecutively operated as shown in FIGS. 3 to 5 may have the following problems.

Referring to FIG. 6, a contact pressure generated between the fixed contact 5a of the fixed plate 5 and the moveable contact 21a of the moveable plate 21 will be explained. It takes about 17 seconds for the moveable contact 21a to be lifted up from a contact time point between the fixed contact 5a and the moveable contact 21a. A contact pressure when the circuit breaker in an 'ON' state is in the range of 2.5∼2.7. More concretely, it takes a long time from the contact time point between the fixed contact 5a and the moveable contact 21a to the time point when the moveable contact 21 is lifted up. This may cause a time duration for which an accident current flows to be long. Accordingly, the amount of energy applied to the circuit breaker is increased to degrade a breaking function of the circuit breaker. Furthermore, reliability on a conductive state between the fixed contact 5a and the moveable contact 21a may be lowered due to a large change of the contact pressure.

### SUMMARY OF THE INVENTION

According to the present invention, there is provided a circuit breaker, comprising: a trip unit configured to detect an accident current; a switching mechanism configured to separate a moveable contact from a fixed contact by receiving a signal indicating the occurrence of an accident current from the trip unit; a shaft assembly configured to be closed or tripped by the switching mechanism, wherein the shaft assembly comprises: a shaft configured to be rotated by the switching mechanism; a connecting plate coupled to the shaft; a moveable plate rotatably coupled to the connecting plate and having the moveable contact for contacting or separating the moveable contact from the fixed contact; a latching plate rotatably coupled to the moveable plate, wherein a sliding recess is formed at the moveable plate, and a cam surface is formed at the latching plate so as to implement a different opened degree of the sliding recess of the moveable plate when the latching plate is rotated; and a latching spring formed as an elastic spring, wherein one end of the latching spring is fixed by a first latching pin that is coupled to one end of the latching plate, and the other end of the latching spring is fixed by a second latching pin that is inserted into the sliding recess thus to be slidably coupled to the cam surface of the latching plate, and configured to elastically support the moveable plate so that the moveable plate can maintain a closed status and a tripped status.

An advantage obtainable with embodiments of the present invention is to provide a circuit breaker capable of having a maximized breaking function by reducing the amount of energy applied thereto, and capable of reducing a time duration for which an accident current flows by rapidly generating an electromagnetic repulsive force between a moveable contact and a fixed contact.

The foregoing and other objects, features, aspects and advantages of the present invention will become more apparent from the following detailed description of the present invention when taken in conjunction with the accompanying drawings.

### BRIEF DESCRIPTION OF THE DRAWINGS

To enable a better understanding of the present invention, and to show how the same may be carried into effect, reference will now be made, by way of example only, to the accompanying drawings, in which:-
FIG. 1 is a sectional view of a circuit breaker having a shaft assembly in accordance with the conventional art;
FIG. 2 is a disassembled perspective view of a latch unit and a moveable plate unit of the shaft assembly in FIG. 1;
FIGS. 3 to 5 are schematic views showing operations of the shaft assembly according to each status in accordance with the conventional art;
FIG. 6 is a graph showing changes of a contact pressure generated between a fixed contact and a moveable contact in FIGS. 3 to 5;
FIG. 7 is a sectional view of a circuit breaker having a shaft assembly according to the present invention;
FIG. 8 is a perspective view of the shaft assembly of FIG. 7;
FIG. 9 is a disassembled perspective view of the shaft assembly of FIG. 8;
FIGS. 10 to 12 are schematic views showing operations of the shaft assembly according to each status according to the present invention; and
FIG. 13 is a graph showing changes of a contact pressure generated between a fixed contact and a moveable contact in FIGS. 10 to 12.

### DETAILED DESCRIPTION

Description will now be given in detail of an embodiment of the present invention, with reference to the accompanying drawings.

For the sake of brief description with reference to the drawings, the same or equivalent components will be provided with the same reference numbers, and description thereof will not be repeated.

Hereinafter, a circuit breaker according to the present invention will be explained in more detail with reference to the attached drawings.

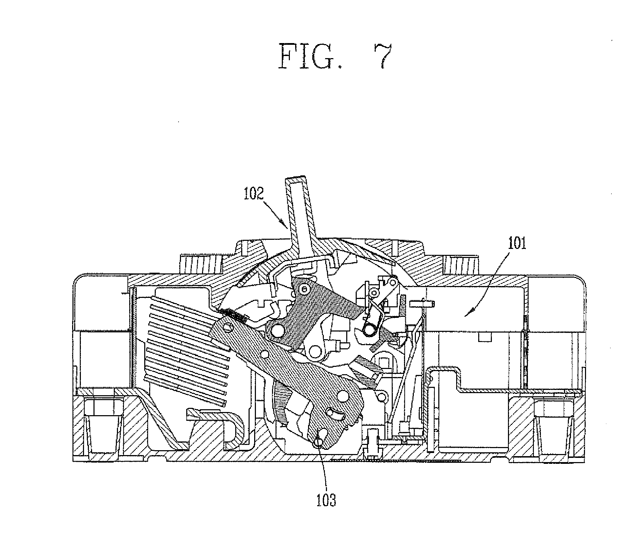

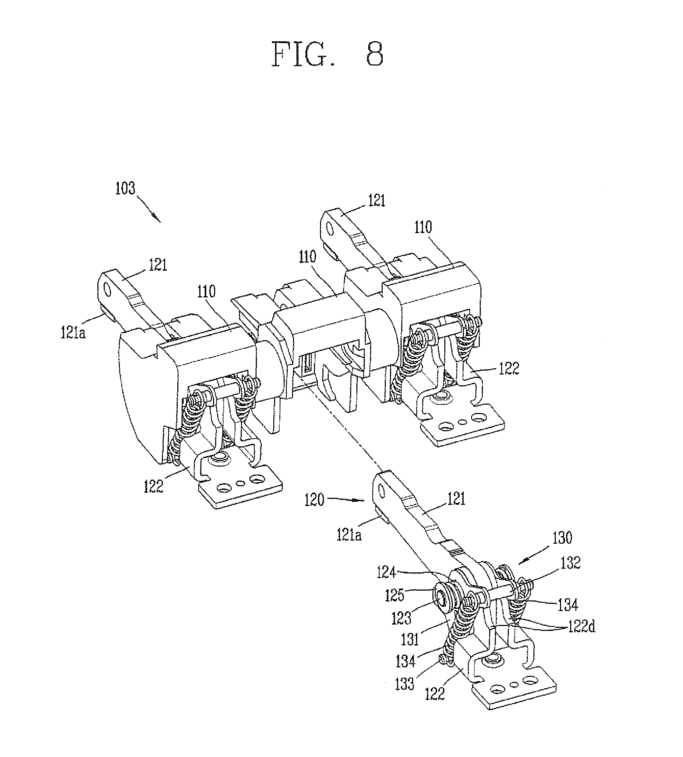

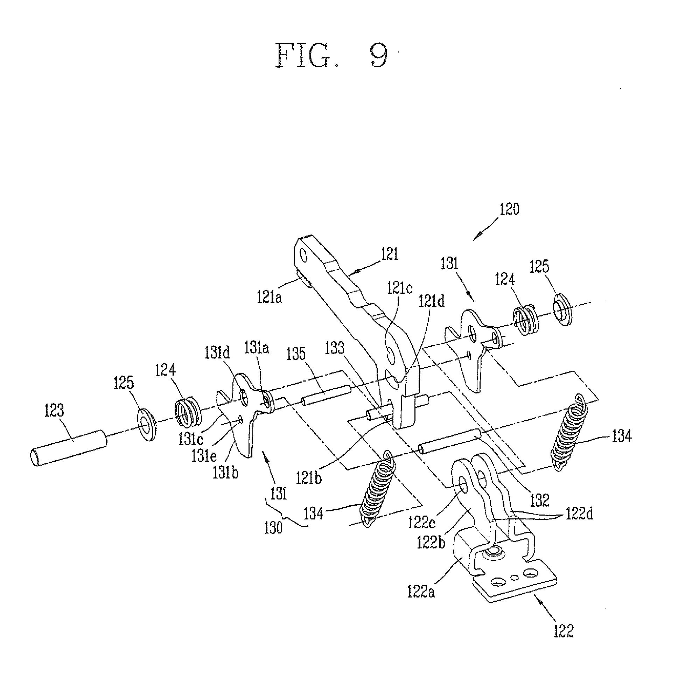

FIG. 7 is a sectional view of a circuit breaker having a shaft assembly according to the present invention, FIG. 8 is a perspective view of the shaft assembly of FIG. 7, and FIG. 9 is a disassembled perspective view of the shaft assembly of FIG. 8.

As shown, a circuit breaker having a shaft assembly according to the present invention comprises a trip unit 101 configured to detect an accident current, a switching mechanism 102 configured to separate a moveable contact 121 a from a fixed contact 5a by receiving a signal indicating the occurrence of an accident current from the trip unit 101, and a shaft assembly 103 closed or tripped by the switching mechanism 102.

The shaft assembly 103 includes a plurality of shafts 110, a moveable plate unit 120 having the moveable contact 121 a detachably mounted to the fixed contact 5a fixed to the circuit breaker, and rotatably coupled to the plurality of shafts 110, and a latch unit 130 coupled to the moveable plate unit 120 so that the moveable plate unit 120 can maintain a closed or tripped status.

The moveable plate unit 120 consists of a moveable plate 121 having the moveable contact 121a at one end thereof, a connecting plate 122 fixedly-coupled to the shaft 110 and having the moveable plate 121 rotatably coupled thereto, a connecting pin 123 forcibly inserted into the shaft 110 by penetratingly-coupling the moveable plate 121 and the connecting plate 122 to each other, connecting springs 124 disposed on outer surfaces of two sides of a latching plate 131 to be later explained, and configured to generate a contact pressure by pushing the latching plate 131, the connecting plate 122, and the moveable plate 121 from two sides, and washers 125 configured to prevent separation of the connecting springs 124.

The moveable plate 121 is formed in a '¬' shape, and the moveable contact 121a is coupled to one end of the moveable plate 121 by welding. To another end of the moveable contact 121a, a sliding recess 121b having a slit shape so as to couple a second latching pin 133 to be later explained thereto is formed in a direction of a pin hole to be later explained. A pin hole 121c for passing the connecting pin 123 therethrough is formed at an intermediate portion of the moveable plate 121, i.e., at a bent portion between two ends. A limit hole 121d having a circular arc shape and configured to restrict a relative motion of the latching plate 131 with respect to the moveable plate 121 is formed at one side of the pin hole 121c.

A body portion 122a of the connecting plate 122 is insertion-fixed to the shaft 110, and a coupling portion 122b having a 'U' shape is formed at an upper end of the body portion 122a so that the moveable plate 121 can be rotatably inserted thereinto. A hinge hole 122c for passing the connecting pin 123 therethrough is formed at one end of the coupling portion 122b. At another end of the coupling portion 122b, a first stop surface 122d with a step are formed so as to restrict a rotation of the latching plate 131 by locking a first latching pin 132 to be later explained.

The latch unit 130 consists of a latching plate 131 disposed between the coupling portion 122b of the connecting plate 122 and the connecting spring 124 so as to plane-contact outer surfaces of two sides of the connecting plate 122, a first latching pin 132 coupled to the latching plate 131, a second latching pin 133 coupled to the sliding recess 121 b of the moveable plate 121, and a plurality of latching springs 134 each having both ends coupled to the first latching pin 132 and the second latching pin 133, respectively, and configured to elastically support the moveable plate 121 so that the moveable plate 121 can maintain a closed status and a tripped status.

The latching plate 131 is formed in a non-linear shape having at least three protrusions, and a latching pin hole 131a for inserting the first latching pin 132 is formed on one protrusion. A cam surface 131 b for slidably supporting the second latching pin 133 is formed on another protrusion linearly or in the form of a minute curved surface. A second stop surface with a step 131 c protruding from the end of the cam surface 131 b with a predetermined stagger angle is linearly formed on still another protrusion so as to restrict a sliding motion of the second latching pin 133. A pin through hole 131d for passing the connecting pin 123 therethrough is formed between two protrusions of the latching plate 131. A pin coupling hole 131e for coupling a limit pin 135 coupled to the limit hole 121d of the moveable plate 121 is formed at one side of the pin through hole 131d.

In a case that the sliding recess 121 b of the moveable plate 121 is formed in a direction of the pin hole, the latching pin hole 131 a of the latching plate 131 is preferably positioned farther than the pin through hole 131d based on the moveable contact 121 a. The reason is because the moveable plate 121 can be moved by a proper electromagnetic contact force.

The plurality of latching springs 134 are implemented as tensile type coil springs each having a predetermined tensile force. As aforementioned, each of the latching springs 134 has both ends fixedly-coupled to the first latching pin 132 and the second latching pin 133, respectively.

Assembly processes of the shaft assembly of the circuit breaker according to the present invention will be explained as follows.

Firstly, the connecting plate 122 is assembled to the moveable plate 121. Then, the connecting pin 123 is insertion-fixed to the connecting plate 122, and the latching plate 131 is inserted to two sides of the connecting pin 123. Then, the connecting springs 124 and the washers 125 are inserted into the connecting pin 123 from two side surfaces of the latching plate 131, respectively.

Then, the assembled moveable plate 121 is inserted into the shaft 110, thereby forcibly inserting the latching plate 131 into a recess (not shown) of the shaft 110. Under this state, the first latching pin 132 is inserted into the latching pin hole 131 a of the latching plate 131, thereby assembling the two latching plates 131. The second latching pin 133 is assembled to the sliding recess 121 b of the moveable plate 121, and two ends of each latching spring 134 are assembled to the first latching pin 132 and the second latching pin 133, respectively.

The shaft assembly according to the present invention has the following effects.

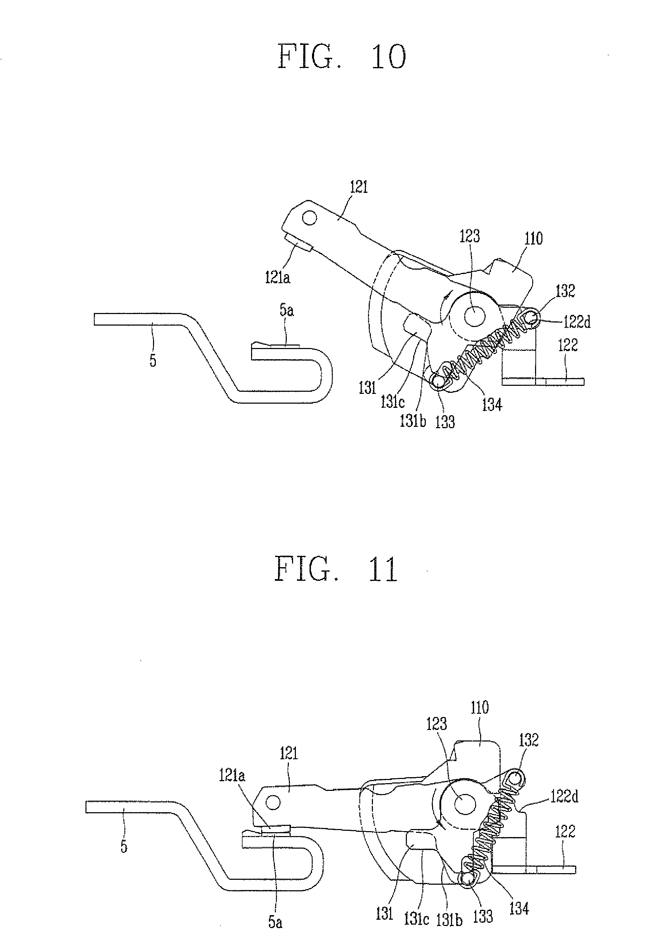

Firstly, when the circuit breaker is in an 'OFF' or open status, the moveable plate 121 and the latching plate 131 are integrally coupled to the shaft 110 by the connecting pin 123 as shown in FIG. 10. As a result, the moveable plate 121 is rotated along a rotation direction of the shaft 110, thereby causing the moveable contact 121 a to be separated from the fixed contact 5a. Here, the first latching pin 132 and the second latching pin 133 are assembled to the latching pin hole 131a of the latching plate 131 and the sliding recess 121 b of the moveable plate 121, respectively. And, a tensile force of the latching springs 134 is transmitted to the moveable plate 121 through the latching plate 131. As a result, the moveable plate 121 maintains an 'OFF' status. The first latching pin 132 is locked by the first stop surface 122d of the connecting plate 122, thereby preventing excessive rotations of the latching plate 131.

When the circuit breaker is in an 'ON' status, the moveable plate 121 is rotated, by the switching mechanism 102, in a direction opposite to that of the tripped status along a rotation direction of the shaft 121. As a result, the moveable contact 121 a comes in contact with the fixed contact 5a. Here, the tensile force of the latching springs 134 is transmitted to the latching plate 131, and thus a forward rotation force is transmitted to the moveable plate 121. Accordingly, a constant contact pressure is generated between the fixed contact 5a and the moveable contact 121 a.

In the occurrence of an accident current, a contact repulsive force is generated between the fixed contact 5a of the fixed plate 5 and the moveable contact 121a of the moveable plate 121. As a result, the moveable plate 121 is lifted up. Here, the second latching pin 133 moves along the cam surface 131 b of the latching plate 131. While moving, the second latching pin 133 is locked by the second stop surface 131 c between the cam surface 131 b and the second stop surface 131 c, thereby restricting a rotation of the moveable plate 121. A backward rotation force is transmitted to the latching plate 131 by the tensile force of the latching springs 134, and the latching plate 131 transmits the backward rotation force to the moveable plate 121. As a result, the moveable plate 121 maintains a lifted status.

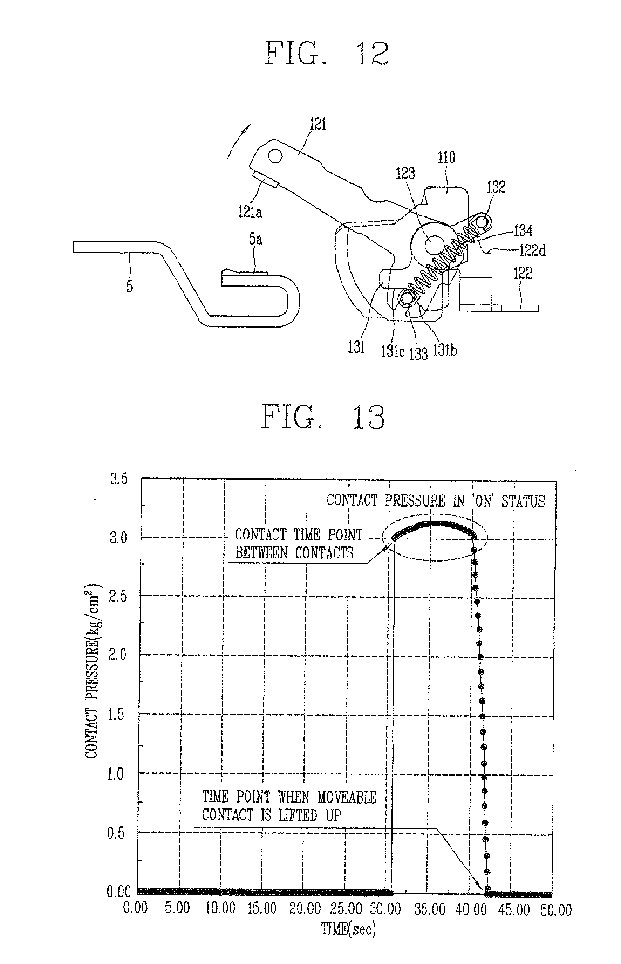

When the circuit breaker is in a tripped status, a closed status and an accident current status consecutively, a contact pressure generated between the fixed contact 5a of the fixed plate 5 and the moveable contact 121a of the moveable plate 121 is shown in FIG. 13. The numerical values shown in FIG. 13 are not absolute values, but relative values for comparison with the conventional values. The horizontal axis indicates time, and the vertical axis indicates a contact pressure.

It takes about 11 seconds for the moveable contact 121 a to be lifted up from a time point when the fixed contact 5a and the moveable contact 121 a come in contact with each other. A contact pressure when the circuit breaker is in an 'ON' status is 3.0. This means that the time taken for the moveable contact 121 to be lifted up is shortened more than the conventional time (17 seconds) by 35%, approximately, and the contact pressure (3.0) is maintained more constantly than in the conventional art.

In the circuit breaker according to the present invention, time taken for the moveable contact to be lifted up from the time point when the fixed contact 5a and the moveable contact 121a come in contact with each other is shortened. This may reduce a time duration for which an accident current flows. Accordingly, the amount of energy applied to the circuit breaker may be reduced, and a breaking function of the circuit breaker may be enhanced.

Furthermore, the cam surface of the latching plate is almost linearly formed based on an inflection point. Accordingly, the contact pressure between the moveable contact and the fixed contact has a constant change after the inflection point. This may enhance a reliability on a conductive state of the moveable contact and the fixed contact.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternative, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without

departing from the characteristics thereof, it should also be understood that the following claims are not limited by any of the details of the foregoing description, unless otherwise specified, and therefore encompasses all equivalents, changes and modifications that fall within their scope.

## Claims

1. A circuit breaker, comprising:
a trip unit (101) configured to detect an accident current;
a switching mechanism (102) configured to separate a moveable contact (121 a) from a fixed contact (5a) by receiving a signal indicating the occurrence of an accident current from the trip unit (101); and
a shaft assembly (103) configured to be closed or tripped by the switching mechanism (102),
wherein the shaft assembly (103) comprises:
a shaft (110) configured to be rotated by the switching mechanism (102);
a connecting plate (122) coupled to the shaft (110);
a moveable plate (121) rotatably coupled to the connecting plate (122) and having the moveable contact (121 a) for contacting or separating the moveable contact (121 a) from the fixed contact (5a);
a latching plate (131) rotatably coupled to the moveable plate (121), wherein a sliding recess (121b) is formed at the moveable plate (121), and a cam surface (131 b) is formed at the latching plate (131) so as to implement a different opened degree of the sliding recess (121b) of the moveable plate (121) when the latching plate (131) is rotated; and
a latching spring (134) formed as an elastic spring, wherein one end of the latching spring (134) is fixed by a first latching pin (132) that is coupled to one end of the latching plate (131), and the other end of the latching spring (134) is fixed by a second latching pin (132) that is inserted into the sliding recess (121b) thus to be slidably coupled to the cam surface (131 b) of the latching plate (131) and configured to elastically support the moveable plate (121) so that the moveable plate can maintain a closed status and a tripped status.

2. The circuit breaker of claim 1, wherein the sliding recess (121b) is long formed on one outer circumferential surface of the moveable plate (121) in a direction of a rotation center of the moveable plate (121).

3. The circuit breaker of claim 1 or 2, wherein the cam surface (131 b) of the latching plate (131) is nearly linearly formed.

4. The circuit breaker of one of claims 1 to 3, wherein a latching pin hole (131 a) for inserting the first latching pin (132) is formed at the latching plate (131), and the latching pin hole (131a) is positioned farther than a rotation center of the moveable plate (121) based on the moveable contact (121a).

5. The circuit breaker of claim 4, wherein a first stop surface (122d) configured to restrict a rotation of the latching plate (131) by mounting the first latching pin (132) thereon is formed at the connecting plate (122).

6. The circuit breaker of claim 4 or 5, wherein a second stop surface (131c) configured to restrict a rotation of the moveable plate (121) by mounting the second latching pin (133) thereon is formed at the latching plate (131).

7. The circuit breaker of one of claims 1 to 6, wherein the moveable plate (121) is provided with a limit hole (121d) having a circular arc shape, and a limit pin (135) configured to restrict a relative motion between the latching plate (131) and the moveable plate (121) by being slidably coupled to the limit hole (121d) of the moveable plate (121) is coupled to the latching plate (131).

## Patentansprüche

1. Leistungsschalter mit:
einer Auslöseeinheit (101), die eingerichtet ist, einen Fehlerstrom zu detektieren;
einem Schaltmechanismus (102), der eingerichtet ist, einen bewegbaren Kontakt (121a) von einem feststehenden Kontakt (5a) durch Empfang eines Signals zu trennen, welches das Auftreten eines Fehlerstroms von der Auslöseeinheit (101) anzeigt; und
einer Wellenbaugruppe (103), die eingerichtet ist, durch den Schaltmechanismus (102) geschlossen oder ausgelöst zu werden,
wobei die Wellenbaugruppe (103) aufweist:
eine Welle (110), die eingerichtet ist, durch den Schaltmechanismus (102) gedreht zu werden;
eine Verbindungsplatte (122), die mit der Welle (110) gekoppelt ist;
eine bewegbare Platte (121), die drehbar mit der Verbindungsplatte (122) gekoppelt ist und den bewegbaren Kontakt (121a) aufweist, um den bewegbaren Kontakt (121a) mit dem feststehenden Kontakt (5a) zu kontaktieren oder von diesem zu trennen;
eine Rastplatte (131), die drehbar mit der bewegbaren Platte (121) gekoppelt ist, wobei eine Schiebeaussparung (121b) an der bewegbaren Platte (121) ausgebildet ist und eine Nockenfläche (131b) an der Rastplatte (131) ausgebildet ist, um so ein unterschiedliches Öffnungsausmaß der Schiebeaussparung (121b) der bewegbaren Platte (121) zu implementieren, wenn die Rastplatte (131) gedreht wird; und
eine Rastfeder (134), die als eine elastische Feder ausgebildet ist, wobei ein Ende der Rastfeder (134) durch einen ersten Raststift (132) fixiert ist, der mit einem Ende der Rastplatte (131) gekoppelt ist, und das andere Ende der Rastfeder (134) durch einen zweiten Raststift (132) fixiert ist, der in die Schiebeaussparung (121b) eigeführt ist, um so verschiebbar mit der Nockenfläche (131b) der Rastplatte (131) gekoppelt und eingerichtet zu sein, die bewegbare Platte (121) elastisch zu stützten, sodass die bewegbare Platte einen geschlossenen Zustand und einen ausgelösten Zustand aufrechterhalten kann.

2. Leistungsschalter nach Anspruch 1, bei dem die Schiebeaussparung (121b) lang auf einer äußeren Umfangsfläche der bewegbaren Platte (121) in einer Richtung von einem Rotationszentrum der bewegbaren Platte (121) ausgebildet ist.

3. Leistungsschalter nach Anspruch 1 oder 2, bei dem die Nockenfläche (131b) der Rastplatte (131) nahezu linear ausgebildet ist.

4. Leistungsschalter nach einem der Ansprüche 1 bis 3, bei dem ein Raststiftloch (131a) zum Einführen des ersten Raststifts (132) an der Rastplatte (131) ausgebildet ist, und das Raststiftloch (131a) basierend auf dem bewegbaren Kontakt (121a) weiter entfernt als ein Rotationszentrum der bewegbaren Platte (121) angeordnet ist.

5. Leistungsschalter nach Anspruch 4, bei dem eine erste Begrenzungsfläche (122d) an der Verbindungsplatte (122) ausgebildet ist, die eingerichtet ist, eine Rotation der Rastplatte (131) durch Anbringen des ersten Raststifts (132) darauf zu beschränken.

6. Leistungsschalter nach Anspruch 4 oder 5, bei dem eine zweite Begrenzungsfläche (131c) an der Rastplatte (131) ausgebildet ist, die eingerichtet ist, eine Rotation der bewegbaren Platte (121) durch Anbringen des zweiten Raststifts (133) darauf zu beschränken.

7. Leistungsschalter nach einem der Ansprüche 1 bis 6, bei dem die bewegbare Platte (121) mit einem Grenzloch (121d) mit einer Kreisbogenform versehen ist, und ein Grenzstift (135) mit der Rastplatte (131) gekoppelt ist, der eingerichtet ist, eine Relativbewegung zwischen der Rastplatte (131) und der bewegbaren Platte (121) zu beschränken, indem dieser verschiebbar mit dem Grenzloch (121d) der bewegbaren Platte (121) gekoppelt ist.

## Revendications

1. Disjoncteur, comprenant :
une unité de déclenchement (101) configurée pour détecter un courant accidentel ;
un mécanisme de commutation (102) configuré pour séparer un contact mobile (121a) d'un contact fixe (5a) en recevant un signal indiquant l'occurrence d'un courant accidentel en provenance de l'unité de déclenchement (101) ; et
un ensemble d'arbre (103) configuré pour être fermé ou déclenché par le mécanisme de commutation (102),
dans lequel l'ensemble d'arbre (103) comprend :
un arbre (110) configuré pour être mis en rotation par le mécanisme de commutation (102) ;
une plaque de connexion (122) couplée à l'arbre (110) ;
une plaque mobile (121) couplée en rotation à la plaque de connexion (122) et ayant le contact mobile (121a) pour la mise en contact du contact mobile (121a) avec le contact fixe (5a) ou sa séparation de celui-ci ;
une plaque de verrouillage (131) couplée en rotation à la plaque mobile (121), où un évidement coulissant (121b) est formé au niveau de la plaque mobile (121), et une surface de came (131b) est formée au niveau de la plaque de verrouillage (131) de manière à appliquer un degré d'ouverture différent de l'évidement coulissant (121b) de la plaque mobile (121) lorsque la plaque de verrouillage (131) est mise en rotation ; et
un ressort de verrouillage (134) formé sous la forme d'un ressort élastique, où une extrémité du ressort de verrouillage (134) est fixée par une première broche de verrouillage (132) qui est couplée à une extrémité de la plaque de verrouillage (131), et l'autre extrémité du ressort de verrouillage (134) est fixée par une deuxième broche de verrouillage (132) qui est insérée dans l'évidement coulissant (121b) pour être ainsi couplée en coulissement à la surface de came (131b) de la plaque de verrouillage (131), et configuré pour supporter de manière élastique la plaque mobile (121) de sorte que la plaque mobile puisse maintenir un état fermé et un état déclenché.

2. Disjoncteur de la revendication 1, dans lequel l'évidement coulissant (121b) a une forme allongée sur une surface circonférentielle externe de la plaque mobile (121) dans une direction d'un centre de rotation de la plaque mobile (121).

3. Disjoncteur de la revendication 1 ou 2, dans lequel la surface de came (131b) de la plaque de verrouillage (131) est formée d'une façon pratiquement linéaire.

4. Disjoncteur de l'une des revendications 1 à 3, dans lequel un trou de broche de verrouillage (131a) pour l'insertion de la première broche de verrouillage (132) est formé au niveau de la plaque de verrouillage (131), et le trou de broche de verrouillage (131a) est positionné plus loin qu'un centre de rotation de la plaque mobile (121) sur la base du contact mobile (121a).

5. Disjoncteur de la revendication 4, dans lequel une première surface d'arrêt (122d) configurée pour limiter une rotation de la plaque de verrouillage (131) par montage de la première broche de verrouillage (132) sur celle-ci est formée au niveau de la plaque de connexion (122).

6. Disjoncteur de la revendication 4 ou 5, dans lequel une deuxième surface d'arrêt (131c) configurée pour limiter une rotation de la plaque mobile (121) par montage de la deuxième broche de verrouillage (133) sur celle-ci est formée au niveau de la plaque de verrouillage (131).

7. Disjoncteur de l'une des revendications 1 à 6, dans lequel la plaque mobile (121) est pourvue d'un trou de limitation (121d) ayant une forme d'arc circulaire, et une broche de limitation (135) configurée pour limiter un déplacement relatif entre la plaque de verrouillage (131) et la plaque mobile (121) en étant couplée en coulissement au trou de limitation (121d) de la plaque mobile (121) est couplée à la plaque de verrouillage (131).
